# EUROPÄISCHE PATENTSCHRIFT

(11) **EP 0 399 205 B1**
(45) Veröffentlichungstag und Bekanntmachung des Hinweises auf die Patenterteilung: **23.02.1994**
(21) Anmeldenummer: 90107203.3
(22) Anmeldetag: 17.04.1990
(51) Int. Cl.: H02B 1/28, H01R 13/527

(54) **Stellungsgeber für eine schlagwettergeschützte, elektrische Steckverbindung**
Position-indicator for an explosion-proof plug-in connector
Indicateur de position pour un connecteur enfichable antidéflagrant

(30) Priorität: 26.05.1989 DE 3917089
(43) Veröffentlichungstag der Anmeldung: 28.11.1990
(73) Patentinhaber: Licentia Patent-Verwaltungs-GmbH, 60596 Frankfurt (DE)
(72) Erfinder: Baron, Horst,, D-2350 Neumünster (DE); Berger, Matthias,, D-2350 Neumünster (DE); Grimm, Jörn,, D-2302 Böhnhusen (DE); Kapusta, Andreas,, D-2350 Neumünster (DE); Müller-Stute, Friedrich, D-2350 Neumünster (DE)
(74) Vertreter: Vogl, Leo, Dipl.-Ing.

(56) Entgegenhaltungen:
- FR-A- 1 544 149
- GB-A- 2 152 302

## Beschreibung

Die Erfindung betrifft einen Stellungsgeber für eine schlagwettergeschützte, elektrische Steckverbindung bestehend aus Stecker und Dose.

Ein derartiger Stellungsgeber ist beispielsweise aus der DE-OS 36 22 812 bekannt. Hierbei handelt es sich um eine elektrische Schaltanlage in schlagwettergeschützter Ausführung mit einem Sammelschienenekanal sowie zwei oder mehreren, mittels Steckvorrichtung mit dem Sammelschienenkanal elektrisch zu verbindende, druckfeste Gehäuse. Die druckfesten Gehäuse sind mit Einfahrkontakten versehen, die in Steckdosen des Sammelschienenkanals eingefahren werden können und von einem Tastschalter auf ihre eingefahrene Stellung überwacht werden. Der Tastschalter ist so ausgelegt, daß er beim Ausfahren des druckfesten Gehäuses erst nach der Trennung der Kontaktelemente der Steckvorrichtung, jedoch vor der Trennung des Steckerteils von dem Dosenteil freigegeben wird, um die Schaltanlage spannungslos zu machen. Der Tastschalter durchragt das Steckdosengehäuse.

Bei einer anderen elektrischen Schaltanlage in schlagwettergeschützter Ausführung mit einem Sammelschienenkanal wird die Einfahrstellung mit einem außerhalb der Steckverbindung liegenden, separaten Endschalter überwacht.

Auch ist durch die GB-A-2 152 302 ein Stellungsgeber für eine schlagwettergeschützte, elektrische Steckverbindung mit einem Hilfsstecker und einer Hilfsdose die in der Steckverbindung integriert ist, bekannt.

Die bekannten Stellungsgeber haben den Nachteil, daß sie durch die Kapselung hindurchragen und damit die schlagwettergeschützte Kapselung beeinträchtigen.

Der Erfindung liegt die Aufgabe zugrunde, einen Stellungsgeber für eine schlagwettergeschützte, elektrische Steckverbindung verfügbar zu machen, der eine Beeinträchtigung der schlagwettergeschützten Kapselung mit Sicherheit vermeidet.

Diese Aufgabe wird gemäß der Erfindung dadurch gelöst, daß der Stellungsgeber aus einem Hilfsstecker und einer Hilfsdose besteht und in der Steckverbindung integriert ist, daß der Hilfsstecker einen Steckerstift aus elektrisch isolierendem Material besitzt, auf dessen Mantelfläche Kontaktbahnen, parallel zur Längsrichtung des Steckerstiftes ausgerichtet, angeordnet sind, und daß die Kontaktbahnen mit Signalabgängen elektrisch verbunden sind und mit Schleifkontakten der Hilfsdose korrespondieren.

Der Vorteil des Stellungsgebers besteht nicht nur darin, daß durch seine Integration in der Steckverbindung von daher eine hermetische Kapselung möglich ist, sondern daß er in der platzsparenden Ausführung eines Mehrfachfunktions-Stellungsgebers vorliegt.

Ein weiterer Vorteil des Stellungsgebers ist darin zu sehen, daß er eine derartige Ausbildung der Steckverbindung ermöglicht, so daß die Übertragung von Digitaldaten wesentlich verbessert wird.

Weiterbildungen der Erfindung sind den Unteransprüchen zu entnehmen.

Das Wesen der Erfindung soll anhand eines in den Zeichnungen dargestellten Ausführungsbeispiels näher erläutert werden. Es zeigen:
- Figur 1: eine bevorzugte Ausführungsform des Stellungsgebers;
- Figur 2: eine Steckverbindung mit dem integrierten Stellungsgeber und
- Fig. 3: die Kontaktseite des Steckers.

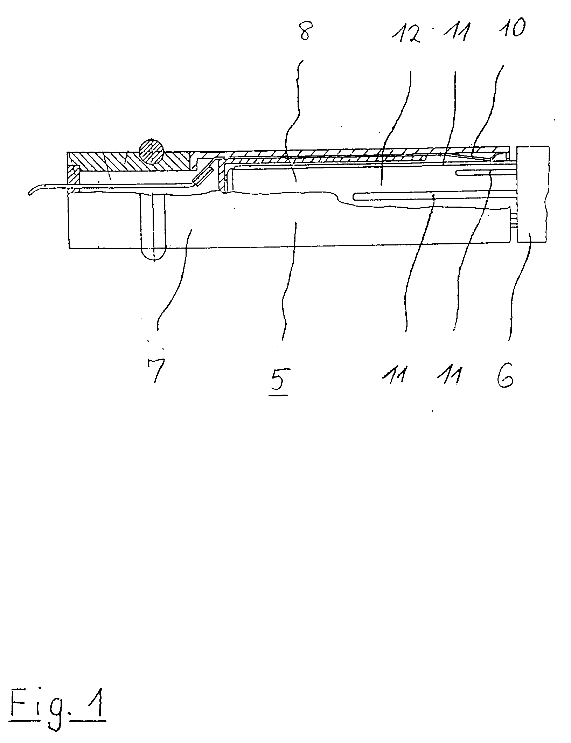

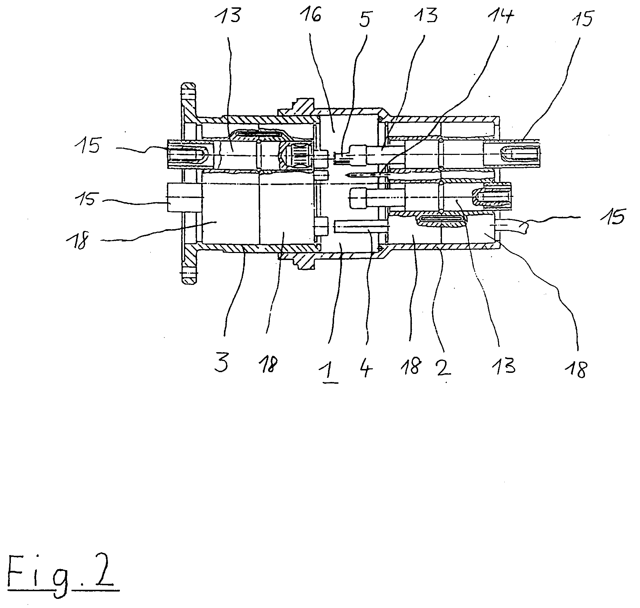

Der Stellungsgeber 5 gemäß Fig. 1 ist als Multifunktionsgeber ausgebildet. Er besteht aus einem Hilfsstecker 6 und einer Hilfsdose 7. Der Hilfsstecker 6 ist am Stecker 2 so angeordnet, daß er sich beim Ineinanderführen der Steckverbindung 1 in dem schlagwettergeschützten Raum 16 befindet (s. Fig. 2). Auf der Mantelfläche 12 seines Steckerstiftes 8, der aus elektrisch isolierendem Material besteht, sind als Kontaktbahnen Kontaktstifte 11 vorgesehen, die auf dem Steckerstift 8 befestigt sind. Die Kontaktstifte 11 sind parallel zur Längsrichtung des Steckerstiftes 8 ausgerichtet und weisen eine unterschiedliche Länge auf, mit der sie sich auf der Mantelfläche 12 erstrecken. Beim Einführen des Hilfssteckers 6 in die Hilfsdose 7 kommen die Kontaktstifte 11 entsprechend ihrer Länge in verschiedenen Einführpositionen mit korrespondierenden Schleifkontakten 10 in Berührung, die auf dem Innenmantel der Hilfsdose 7 angeordnet sind. Anstelle der Kontaktstifte können auch in der Mantelfläche 12 des Steckerstiftes 8 integrierte Kontaktbahnen zur Anwendung kommen. Der Stellungsgeber 5 ist entsprechend den anderen Kontakten in den Dichtteilen 18 des Steckers 2 und der Dose 3 gehalten (s. Fig. 2).

In Fig. 2 ist eine schlagwettergeschützte Steckverbindung 1 gezeigt, die aus einem Stecker 2 und einer Dose 3 besteht und mit Leistungskontakten 13, Steuerkontakten 14, einem Datenbuskontakt 4 und einem integrierten Stellungsgeber 5 versehen ist. Die Kontakte 13, 14 und 4 sowie der Stellungsgeber 5 sind mit ihren entsprechenden Teilen in den Stecker 2 und in der Dose 3 in bekannter Weise, von O-Ringen gehalten, in zusammengefügten Dichtteilen 18 eingesetzt. Damit wird die schlagwettergeschützte Herausleitung der Kontaktabgänge 15 aus Stecker 2 und Dose 3 gewährleistet und die gegeneinander elektrisch isolierende Anordnung der Kontakte erreicht. Durch die integrierte Anordnung des Stellungsgebers 5 entfällt eine weitere schlagwettergeschützte Ausführung. Mit dem Ineinanderführen von Stecker 2 und Dose 3 kommen die Kontakte 13, 14, 4 und der Stellungsgeber 5 miteinander in Eingriff, wobei dieser in einem schlagwettergeschützten Raum erfolgt. Dieser schlagwettergeschützte Raum 16 wird beim Ineinanderführen der Steckverbindung durch eine auf der Außenfläche der Dose dichtend gleitende Steckerwandung hergestellt.

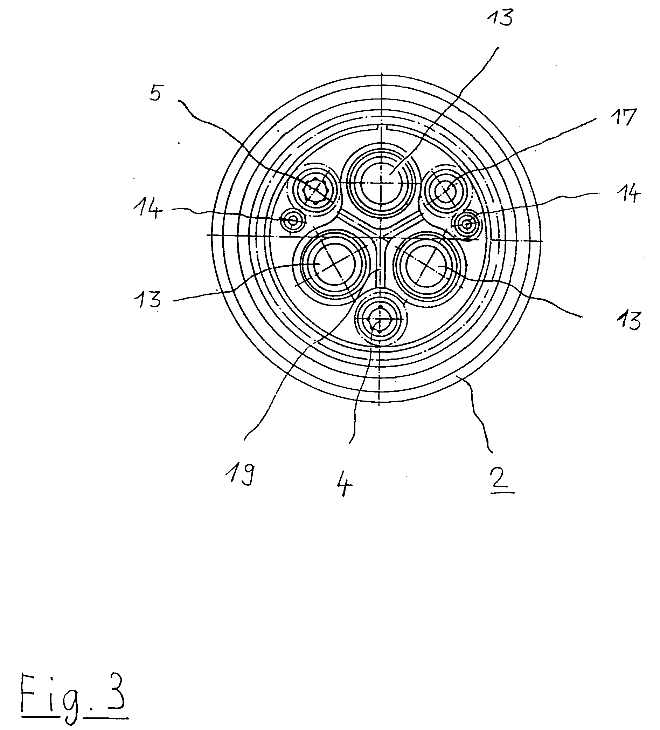

Fig. 3 zeigt auf der Kontaktseite des Steckers 2 die räumliche Anordnung der Kontakte zueinander. Die drei Leistungskontakte 13 sind untereinander getrennt von einer sternförmigen Barriere in den Eckpunkten eines gleichseitigen, gedachten Dreiecks angeordnet. In den Eckpunkten eines anderen Dreiecks, gegenüber dem ersten Dreieck verdreht, sind die drei Hilfskontakte 17, 4, 5 angeordnet, von denen einer als mehrpoliger Datenbuskontakt 4, einer als Stellungsgeber 5 und einer als Hilfskontakt 17 ausgebildet ist. Weiterhin sind zwei Steuerkontakte 14 vorhanden, von denen einer dem Stellungsgeber 5 und der andere dem Hilfskontakt 17 benachbart zugeordnet ist. Bei dieser Anordnung der Kontakte befindet sich in der Nähe des Datenbuskontaktes 4 kein anderer Steuer-oder Hilfskontakt 14, 17. Damit gibt die Ausbildung und Anordnung des Stellungsgebers 5 die Möglichkeit, daß die Übertragung der Digitaldaten frei von elektromagnetischen Störungen benachbarter Steuerleitungen erfolgt.

## Patentansprüche

1. Stellungsgeber für eine schlagwettergeschützte, elektrische, aus Strecken und Dose bestehende Steckverbindung mit einem Hilfsstecker und einer Hilfsdose, die in der Steckverbindung integriert ist, **dadurch gekennzeichnet,** daß der Hilfsstecker (6) einen Steckerstift (8) aus elektrisch isolierendem Material besitzt, auf dessen Mantelfläche (12) Kontaktbahnen (11), parallel zur Längsrichtung des Steckerstiftes (8) ausgerichtet, angeordnet sind, und daß die Kontaktbahnen (11),die mit Schleifkontakten (10) der Hilfsdose (7) korrespondieren, mit Signalabgängen elektrisch verbunden sind.

2. Stellungsgeber nach Anspruch 1,
dadurch gekennzeichnet, daß die Kontaktbahnen (11) mit unterschiedlicher Länge so auf dem Steckerstift (8) angeordnet sind, daß bei verschiedenen Einführstellungen des Steckers (2) in die Dose (3) eine unterschiedliche Anzahl von Kontaktbahnen (11) mit Schleifkontakten (10) in elektrisch leitender Verbindung sind.

3. Stellungsgeber nach Anspruch 1,
dadurch gekennzeichnet, daß die Schleifkontakte (10) in unterschiedlicher Einbautiefe innerhalb der Hilfsdose (7) angeordnet sind und mit gleich langen Kontaktbahnen (9) auf dem Steckerstift (8) in verschiedenen Einführstellungen korrespondieren.

4. Stellungsgeber nach einem der Ansprüche 1 bis 3, dadurch gekennzeichnet, daß die Kontaktbahnen (11) als Kontaktstifte ausgebildet sind.

5. Stellungsgeber nach einem der Ansprüche 1 bis 4, dadurch gekennzeichnet, daß die Steckverbindung Leistungs-, Steuer- und Hilfskontakte für Datenübertragungszwecke aufweist und daß der Stellungsgeber (5) als weiterer Hilfskontakt in der Steckverbindung (1) ausgebildet ist.

6. Stellungsgeber nach Anspruch 5,
dadurch gekennzeichnet, daß ein Hilfskontakt als mehrpoliger Datenbuskontakt (4) ausgebildet und von anderen Hilfkontakten in der Steckverbindung (1) räumlich getrennt ist.

## Claims

1. Setting transmitter for an electrical plug connection, which is protected against an explosive atmosphere and consists of a plug and socket, with an auxiliary plug and an auxiliary socket which is integrated into the plug connection, characterised thereby that the auxiliary plug (6) possesses a plug pin (8) of electrically insulating material, on the envelope surface (12) of which are arranged contact tracks (11) oriented parallel to the longitudinal direction of the plug pin (8), and that the contact tracks (11), which correspond with sliding contacts (10) of the auxiliary socket (7), are electrically connected with signal outputs.

2. Setting transmitter according to claim 1, characterised thereby that the contact tracks (11) with different lengths are so arranged on the plug pin (8) that in the case of different insertion settings of the plug (2) in the socket (3) a different number of contact tracks (11) are in electrically conductive connection with sliding contacts (10).

3. Setting transmitter according to claim 1, characterised thereby that the sliding contacts (10) are arranged within the auxiliary socket (7) at different installation depths and correspond with equal length contact tracks (9) on the plug pin (9) at different insertion settings.

4. Setting transmitter according to one of claims 1 to 3,
characterised thereby that the contact tracks (11) are constructed as contact pins.

5. Setting transmitter according to one of claims 1 to 4,
characterised thereby that the plug connection has power, control and auxiliary contacts for data transmission purposes and that the setting transmitter (5) is constructed as a further auxiliary contact in the plug connection (1).

6. Setting transmitter according to claim 5, characterised thereby that one auxiliary contact is constructed as a multipole data bus contact (4) and is spatially separated from other auxiliary contacts in the plug connection (1).

## Revendications

1. Capteur de position pour une connexion à fiches électrique antigrisouteuse se composant d'une fiche et d'une prise, cette connexion présentant une fiche auxiliaire et une prise auxiliaire qui est intégrée dans la connexion à fiches, caractérisé en ce que la fiche auxiliaire (6) dispose d'une pointe de contact (8) en matière isolante électriquement sur l'enveloppe (12) de laquelle des voies de contact (11) sont disposées parallèlement au sens longitudinal de la pointe de contact (8) et que les voies de contacts (11) qui correspondent aux contacts à frottement (10) de la prise auxiliaire (7) sont reliés électriquement à des sorties de signaux.

2. Capteur de position selon la revendication 1, caractérisé en ce que les voies de contact (11) de longueurs différentes sont disposées sur la pointe de contact (8) de sorte que, pour des positions d'insertion de la fiche (2) dans la prise (3), un nombre différent de voies de contact (11) est en connexion électriquement conductrice avec des contacts à frottement (10).

3. Capteur de position selon la revendication 1, caractérisé en ce que les contacts à frottement (10) sont disposés à différentes profondeurs de montage à l'intérieur de la prise auxiliaire (7) et correspondent à des voies de contact (9) de même longueur sur la pointe de contact (8) dans différentes positions d'insertion.

4. Capteur de position selon l'une des revendications 1 à 3, caractérisé en ce que les voies de contact (11) sont conçues comme des pointes de contact.

5. Capteur de position selon l'une des revendications 1 à 4, caractérisé en ce que la connexion à fiches présente des contacts de puissance, des contacts de commande et des contacts auxiliaires dans un but de transmission de données et que le capteur de position (5) est conçu, dans la connexion à fiches (1), comme contact auxiliaire supplémentaire.

6. Capteur de position selon la revendication 5, caractérisé en ce qu'un contact auxiliaire est conçu comme un contact de bus de données multipolaire (4) et est séparé, dans l'espace, des autres contacts auxiliaires dans la connexion à fiches (1).
